(19) Europäisches Patentamt / European Patent Office / Office européen des brevets

(11) **EP 3 430 306 B1**

(12) **EUROPÄISCHE PATENTSCHRIFT**

(45) Veröffentlichungstag und Bekanntmachung des Hinweises auf die Patenterteilung:
**23.10.2024 Patentblatt 2024/43**

(21) Anmeldenummer: **17706253.6**

(22) Anmeldetag: **21.02.2017**

(51) Internationale Patentklassifikation (IPC):
*B60Q 1/08* (2006.01)   *G02F 1/1335* (2006.01)
*H04N 9/31* (2006.01)   *F21S 41/143* (2018.01)
*F21S 41/155* (2018.01)   *F21S 41/255* (2018.01)
*F21S 41/20* (2018.01)   *F21S 41/43* (2018.01)
*F21S 41/64* (2018.01)

(52) Gemeinsame Patentklassifikation (CPC):
**F21S 41/285; F21S 41/143; F21S 41/155;
F21S 41/255; F21S 41/43; F21S 41/645;
G02F 1/133526; H04N 9/3141**

(86) Internationale Anmeldenummer:
**PCT/EP2017/053893**

(87) Internationale Veröffentlichungsnummer:
**WO 2017/157623 (21.09.2017 Gazette 2017/38)**

(54) **SCHEINWERFER FÜR EIN KRAFTFAHRZEUG**

HEADLIGHT FOR A MOTOR VEHICLE

PROJECTEUR POUR UN VÉHICULE AUTOMOBILE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **16.03.2016 DE 102016204342**

(43) Veröffentlichungstag der Anmeldung:
**23.01.2019 Patentblatt 2019/04**

(73) Patentinhaber: **Bayerische Motoren Werke
Aktiengesellschaft
80809 München (DE)**

(72) Erfinder: **GOCKE, Tim
80993 München (DE)**

(56) Entgegenhaltungen:
EP-A1- 0 738 904   EP-A2- 2 381 162
WO-A1-2015/058227   DE-A1- 10 308 703
DE-A1- 102007 028 658   DE-A1- 102012 103 313
DE-A1- 102013 208 625   DE-A1- 102013 221 953
DE-T5- 112013 003 050   JP-A- 2011 022 311
US-A1- 2009 086 500   US-A1- 2016 010 811

**Beschreibung**

Die Erfindung betrifft einen Scheinwerfer für ein Kraftfahrzeug, insbesondere einen Frontscheinwerfer.

Aus dem Stand der Technik ist es bekannt, die Lichtverteilung eines Kraftfahrzeugscheinwerfers dynamisch durch mechanisch bewegliche Lichtmodule zu verändern. Auf diese Weise kann die Ausleuchtung des Bereichs vor dem Scheinwerfer in Abhängigkeit von verschiedenen Bedingungen optimiert werden. Zum Beispiel kann ein Kurvenlicht geschaffen werden, bei dem der Scheinwerfer bei einer Kurvenfahrt in die Kurve leuchtet. Ebenso kann ein blendfreies Fernlicht realisiert werden, bei dem bestimmte Bereiche der Fernlichtverteilung, die zu einer Blendung von voranfahrendem Verkehr bzw. Gegenverkehr führen würden, ausgeblendet werden.

Herkömmliche Scheinwerfer mit der Funktionalität einer dynamischen Lichterzeugung weisen den Nachteil auf, dass hierzu eine aufwändige Mechanik im Scheinwerfer zu integrieren ist.

Die Druckschrift US 2016/010811 A1 offenbart eine Beleuchtungsvorrichtung, die als Scheinwerfer eingesetzt werden kann und ein Multiapertur-Projektionsdisplay mit einem flächigen LCD-Bildgeber umfasst.

In dem Dokument DE 10 2012 103 313 A1 ist ein Lichtmodul für den Scheinwerfer eines Fahrzeugs beschrieben, welches eine Basislichtquelle zur Erzeugung einer Basislichtfunktion und wenigstens eine Zusatzlichtquelle zur Erzeugung einer Zusatzlichtfunktion umfasst, wobei zumindest die Basislichtquelle mittels einer Schwenkvorrichtung verschwenkbar ist.

Das Dokument WO 2015/058227 A1 offenbart ein Multiprojektions-Lichtmodul für einen Kraftfahrzeugscheinwerfer mit einer Blendenvorrichtung, welche verschiedene Typen von Blenden umfasst.

Aufgabe der Erfindung ist es, einen Scheinwerfer für ein Kraftfahrzeug zu schaffen, mit dem ein dynamischer Anteil des Scheinwerferlichts auf einfache Weise erzeugt werden kann.

Diese Aufgabe wird durch den Scheinwerfer gemäß Patentanspruch 1 gelöst. Weiterbildungen der Erfindung sind in den abhängigen Ansprüchen definiert.

Der erfindungsgemäße Scheinwerfer ist für ein Kraftfahrzeug, wie z. B. einen PKW, vorgesehen. Vorzugsweise ist der Scheinwerfer ein Frontscheinwerfer. Der Scheinwerfer umfasst eine erste Beleuchtungseinrichtung und eine zweite Beleuchtungseinrichtung zur gemeinsamen Erzeugung einer Lichtverteilung vor dem Scheinwerfer. Die erste Beleuchtungseinrichtung dient zur Erzeugung eines statischen Anteils der Lichtverteilung, wohingegen die zweite Beleuchtungseinrichtung zur Erzeugung eines dynamischen Anteils der Lichtverteilung vorgesehen ist. Der Begriff des statischen Anteils ist derart zu verstehen, dass dieser Anteil innerhalb der Lichtverteilung unveränderlich ist, jedoch die Lichtverteilung gegebenenfalls als Ganzes, z.B. bei einer Höhenverstellung des Scheinwerfers im Kraftfahrzeug, beweglich sein kann. Der Begriff des dynamischen Anteils ist derart zu verstehen, dass dieser Anteil innerhalb der Lichtverteilung zeitlich veränderbar ist, um hierdurch Bereiche der generierten Lichtverteilung in Form und/oder Helligkeit zu verändern.

Der erfindungsgemäße Scheinwerfer zeichnet sich dadurch aus, dass die zweite Beleuchtungseinrichtung ein Multiapertur-Projektionsdisplay mit einem Leuchtmittel und einem flächigen digitalen Bildgeber sowie einem Array aus Projektionslinsen umfasst. Der digitale Bildgeber enthält Segmente mit einer veränderbaren Aufteilung des jeweiligen Segments in transmittive und lichtundurchlässige Bereiche. Ein transmittiver Bereich stellt in einer bevorzugten Variante einen Bereich mit einem Transmissionsgrad von 100% dar. Nichtsdestotrotz können transmittive Bereiche ggf. auch einen niedrigeren Transmissionsgrad aufweisen. Ein lichtundurchlässiger Bereich hat demgegenüber immer einen Transmissionsgrad von 0%. Die Aufteilung in transmittive und lichtundurchlässige Bereiche kann dadurch verändert werden, dass die Größen der transmittiven und lichtundurchlässigen Bereiche verändert werden. Eine Veränderung der Aufteilung in transmittive und lichtundurchlässige Bereiche liegt aber auch dann vor, wenn der Transmissionsgrad von transmittiven Bereichen verändert wird, denn die Verwendung von modifizierten transmittiven Bereichen resultiert in einer andersartigen Aufteilung. Die Aufteilung in transmittive und lichtundurchlässige Bereiche kann in einem Segment ferner derart gewählt sein, dass das Segment vollflächig transmittiv oder vollflächig lichtundurchlässig ist.

Jede Projektionslinse ist einem Segment des digitalen Bildgebers zugeordnet, d.h. die Anzahl der Segmente entspricht der Anzahl an Projektionslinsen. Dabei ist der Pitch-Abstand zwischen benachbarten Segmenten größer ist als der Pitch-Abstand zwischen benachbarten Projektionslinsen. Bei Beleuchtung des Arrays mit dem Leuchtmittel wird zumindest ein Teil der Segmente durch die zugeordneten Projektionslinsen vor den Scheinwerfer projiziert. Ein Segment umfasst eine Vielzahl von Pixeln des digitalen Bildgebers, insbesondere mindestens 0,5 Megapixel (500 000 Pixel) des digitalen Bildgebers. Hierdurch können scharfkantige Strukturen für eine jeweilige Projektionslinse sowie in der entsprechenden Projektion generiert werden.

Der Scheinwerfer ist derart ausgestaltet, dass der digitale Bildgeber bei Betrieb des Scheinwerfers im Kraftfahrzeug durch Veränderung der Aufteilung in transmittive und lichtdurchlässige Bereiche für zumindest einen Teil der Segmente die dynamische Lichtverteilung erzeugt. Mit anderen Worten umfasst der Scheinwerfer eine Steuereinrichtung zur Ansteuerung des digitalen Bildgebers derart, dass der dynamische Anteil der Lichtverteilung erzeugt wird.

Die Erfindung beruht auf der Idee, ein an sich bekanntes Multiapertur-Projektionsdisplay mit digitalem Bildgeber dazu zu nutzen, um dynamische Lichteffekte im Scheinwerferlicht zu generieren. Im Gegensatz zum Stand der Technik wird dabei keine Mechanik im Scheinwerfer benötigt, sondern die Veränderung der Lichtverteilung erfolgt rein durch Ansteuerung eines digitalen Bildgebers.

In einer bevorzugten Variante umfasst das Multiapertur-Projektionsdisplay neben dem Array aus Projektionslinsen auch ein Array aus Feldlinsen, welches zwischen dem Leuchtmittel und dem flächigen Bildgeber angeordnet ist. Als Leuchtmittel werden im Projektionsdisplay vorzugsweise eine oder mehrere LEDs bzw. ggf. auch eine oder mehrere Laserdioden verwendet. Die Projektionslinsen des Multiapertur-Projektionsdisplay sind vorzugsweise runde Linsen mit einem Durchmesser von 2000 $\mu$m oder weniger, insbesondere von 1000 $\mu$m oder weniger (z.B. 800 $\mu$m).

In einer besonders bevorzugten Ausführungsform wird im erfindungsgemäßen Scheinwerfer ein Multiapertur-Projektionsdisplay verwendet, welches in dem Dokument DE 10 2009 024 894 A1 bzw. in dem Dokument DE 10 2011 076 083 A1 beschrieben ist. Der gesamte Offenbarungsgehalt dieser Druckschriften wird durch Verweis zum Inhalt dieser Anmeldung gemacht.

In einer bevorzugten Ausführungsform sind mit dem erfindungsgemäßen Scheinwerfer eine Abblendlichtverteilung und/oder eine Fernlichtverteilung und/oder ein blendfreies Fernlicht je nach Betriebsmodus des Scheinwerfers generierbar.

Vorzugsweise ist der erfindungsgemäße Scheinwerfer derart ausgestaltet, dass der mit der zweiten Beleuchtungseinrichtung erzeugte dynamische Anteil der Lichtverteilung bei Betrieb des Scheinwerfers im Kraftfahrzeug in Abhängigkeit von einem oder mehreren Fahrparametern des Kraftfahrzeugs und/oder einem oder mehreren Parametern in der Umgebung des Kraftfahrzeugs erzeugt wird.

In einer besonders bevorzugten Ausführungsform wird mit der zweiten Beleuchtungseinrichtung in einem Betriebsmodus des Scheinwerfers eine dynamische Hell-Dunkel-Grenze einer Abblendlichtverteilung erzeugt, wodurch ein an sich bekanntes Kurvenlicht realisiert werden kann. Alternativ oder zusätzlich kann mit der zweiten Beleuchtungseinrichtung in einem Betriebsmodus des Scheinwerfers die Breite der Lichtverteilung verändert werden und/oder Objekte in der Umgebung des Kraftfahrzeugs stärker oder weniger stark beleuchtet werden. Hierdurch können eine oder mehrere der in der detaillierten Beschreibung erläuterten Funktionalitäten eines Stadtlichts, Autobahnlichts, Führungslichts, Markierungslichts, Baustellenlichts und Notmanövrierlichts sowie ggf. auch andere Funktionalitäten realisiert werden.

In einer besonders bevorzugten Ausführungsform ist die erste Beleuchtungseinrichtung des erfindungsgemäßen Scheinwerfers eine makrooptische Beleuchtungseinrichtung ohne Multiapertur-Projektionsdisplay. Mit anderen Worten ist die erste Beleuchtungseinrichtung eine Beleuchtungseinrichtung ohne Linsen oder eine Beleuchtungseinrichtung mit einer oder mehreren makrooptischen Linsen. Unter einer makrooptischen Linse ist hier und im Folgenden eine Linse zu verstehen, die in Draufsicht eine minimale Ausdehnung von 1 cm oder mehr und insbesondere von 3 cm oder mehr aufweist. Vorzugweise enthält die erste Beleuchtungseinrichtung maximal 25 Linsen und insbesondere maximal fünf Linsen. Je nach Ausgestaltung kann die erste Beleuchtungseinheit eine Beleuchtungseinheit mit Projektionsoptik und/oder eine Beleuchtungseinheit mit Reflexionsoptik umfassen. Durch die Verwendung der soeben beschriebenen ersten Beleuchtungseinrichtung ohne Multiapertur-Projektionsdisplay kann der statische Anteil der Lichtverteilung durch ein einfaches und kostengünstiges Scheinwerfermodul realisiert werden.

In einer weiteren, besonders bevorzugten Ausgestaltung des erfindungsgemäßen Scheinwerfers wird als digitaler Bildgeber der zweiten Beleuchtungseinrichtung ein LCD-Display, insbesondere ein TFT-Display, verwendet.

Je nach Art des im erfindungsgemäßen Scheinwerfer verwendeten Multiapertur-Projektionsdisplays können die transmittiven Bereiche in den jeweiligen Segmenten einen festen Transmissionsgrad von 100% oder einen variablen positiven Transmissionsgrad von maximal 100% aufweisen. Mit anderen Worten kann über den digitalen Bildgeber gegebenenfalls die Aufteilung der jeweiligen Segmente in transmittive und undurchlässige Bereiche über eine Variation des Transmissionsgrads der transmittiven Bereiche verändert werden.

Neben dem oben beschriebenen Scheinwerfer betrifft die Erfindung ferner ein Kraftfahrzeug, welches einen oder mehrere der erfindungsgemäßen Scheinwerfer bzw. eine oder mehrere bevorzugte Varianten des erfindungsgemäßen Scheinwerfers umfasst.

Ausführungsbeispiele der Erfindung werden nachfolgend anhand der beigefügten Figuren detailliert beschrieben.

Es zeigen:

Fig. 1    eine perspektivische Darstellung eines Scheinwerfers gemäß einer Ausführungs-form der Erfindung; und

Fig. 2    eine Schnittansicht durch das Multiapertur-Projektionsdisplay des Scheinwerfers aus Fig. 1.

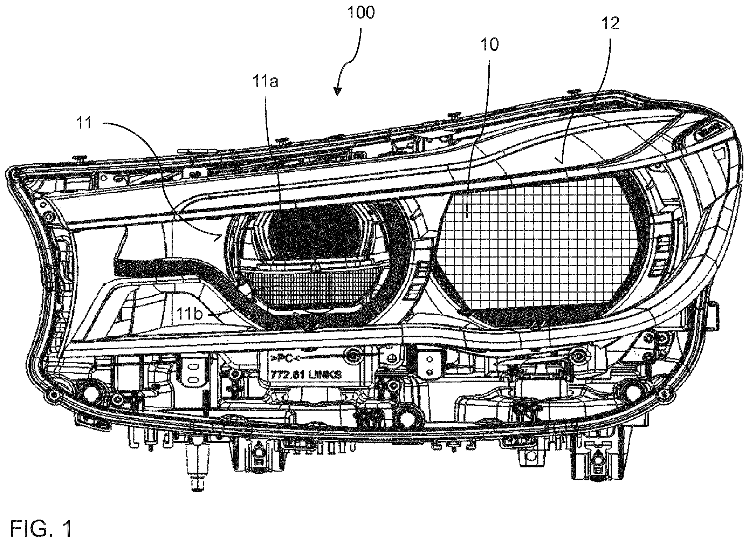

Nachfolgend wird eine Ausführungsform der Erfindung anhand des in Fig. 1 gezeigten linken Kfz-Frontscheinwerfers 100 erläutert. Dieser Frontscheinwerfer umfasst eine an sich bekannte innere Beleuchtungseinrichtung 11, mit der eine statische Basislichtverteilung sowohl des Abblendlichts als auch des Fernlichts des Scheinwerfers generiert wird. Hierzu ist in der Beleuchtungseinrichtung 11 eine obere makrooptische Beleuchtungseinheit 11a basierend auf einer Projektionsoptik mit Makrolinsen vorgesehen. Die Makrolinsen haben einen wesentlich größeren Durchmesser als die Projektionslinsen des weiter unten beschriebenen Multiapertur-Projektionsdisplays. Mit der Beleuchtungseinheit 11a wird bei aktiviertem Abblendlicht der statische Anteil einer Abblendlichtverteilung erzeugt, der nicht variiert werden kann.

Die Beleuchtungseinrichtung 11 enthält ferner eine untere makrooptische Beleuchtungseinheit 11b basierend auf einer Reflexionsoptik. Diese Beleuchtungseinheit 11b wird zusätzlich zur Beleuchtungseinheit 11a angeschaltet, wenn mit dem Scheinwerfer eine (nicht-blendfreie) Fernlichtverteilung generiert wird. Die Lichtverteilung, die über die Beleuchtungseinheit 11b erzeugt wird, ist ebenfalls statisch. Die beiden Beleuchtungseinheiten 11a und 11b verwenden in einer bevorzugten Variante als Leuchtmittel eine oder mehrere LEDs. Nichtsdestotrotz können die Beleuchtungseinheiten gegebenenfalls auch eine Xenon-Lichtquelle bzw. eine Laserlichtquelle enthalten.

Neben der inneren Beleuchtungseinrichtung 11 umfasst der Scheinwerfer 100 eine äußere Beleuchtungseinrichtung 12. In herkömmlichen Scheinwerfern ist diese analog zu der Beleuchtungseinrichtung 11 aus makrooptischen Beleuchtungseinheiten basierend auf einer Projektionsoptik und einer Reflexionsoptik gebildet. Dabei wird mit der äußeren Beleuchtungseinrichtung zusätzlich zu der statischen Lichtverteilung der inneren Beleuchtungseinrichtung eine dynamische Lichtverteilung generiert, welche in der Gesamtlichtverteilung aus beiden Beleuchtungseinrichtungen 11 und 12 dynamisch (d.h. zeitlich veränderlich) ihre Position und ggf. weitere Charakteristika verändern kann. Hierzu ist die äußere Beleuchtungseinrichtung 12 mechanisch bewegbar. Mittels der dynamischen Lichtverteilung der äußeren Beleuchtungseinrichtung kann z.B. die Funktion eines Kurvenlichts realisiert werden, welches bei einer Kurvenfahrt die Lichtverteilung in Kurvenrichtung verändert.

Die hier beschriebene Ausführungsform des erfindungsgemäßen Scheinwerfers zeichnet sich dadurch aus, dass die äußere Beleuchtungseinrichtung 12 zur Erzeugung eines dynamischen Anteils des Scheinwerferlichts nicht mehr mechanisch bewegt wird, sondern hierzu ein Multiapertur-Projektionsdisplay 10 umfasst, welches eine Vielzahl von Projektionslinsen aufweist, denen jeweils ein Segment eines LCD-Displays zugeordnet ist, wobei das Segment über die zugehörige Projektionslinse vor den Scheinwerfer projiziert wird. In den Segmenten wird mittels des LCD-Displays eine Objektstruktur aus transmittiven und lichtundurchlässigen Bereichen ausgebildet, wobei die Objektstruktur über eine entsprechende Ansteuerung des LCD-Displays verändert werden kann. Im Besonderen werden dabei die Anteile von transmittiven und lichtundurchlässigen Bereichen der jeweiligen Segmente dynamisch verändert, um hierdurch z.B. eine Bewegung der generierten Lichtverteilung zu erzeugen. Auf diese Weise wird der dynamische Anteil der durch den Scheinwerfer generierten Gesamtlichtverteilung rein durch Ansteuerung eines LCD-Displays ohne mechanische Mittel erreicht.

Die mit der Beleuchtungseinrichtung 12 erzeugte dynamische Lichtverteilung kann schnell und flexibel an verschiedene Fahrparameter bzw. Parameter der Umgebung angepasst werden. Im Besonderen kann das Multiapertur-Projektionsdisplay zur Erzeugung eines Kurvenlichts eingesetzt werden. Ebenso können andere dynamische Lichtverteilungen generiert werden. Zum Beispiel kann mithilfe des Projektionsdisplays ein blendfreies Fernlicht erzeugt werden. Hierzu wird das Fernlicht rein über die Beleuchtungseinheit 11a der inneren Beleuchtungseinrichtung 11 und das Multiapertur-Projektionsdisplay 10 der äußeren Beleuchtungseinrichtung gebildet, wobei durch entsprechende Ansteuerung des LCD-Displays in der äußeren Beleuchtungseinrichtung solche Bereiche aus der Fernlichtverteilung ausgeschnitten werden, die zur Blendung von voranfahrendem bzw. entgegenkommendem Verkehr führen würden.

Ebenso kann mit der Beleuchtungseinrichtung 12 ein Markierungslicht generiert werden, bei dem bestimmte Bereiche in der Gesamtlichtverteilung stärker ausgeleuchtet und damit erhellt werden. Darüber hinaus kann die Beleuchtungseinrichtung 12 gegebenenfalls zur Erzeugung eines Stadtlichts dienen, welches eine breitere Ausleuchtung der Fahrbahn mit geringerer Helligkeit bewirkt. Ferner kann gegebenenfalls ein Autobahnlicht erzeugt werden, bei dem die Fahrbahn mit geringerer Breite, jedoch größerer Helligkeit ausgeleuchtet wird. Darüber hinaus kann gegebenenfalls auch ein Führungslicht generiert werden, durch das dem Fahrer des Kraftfahrzeugs vermittelt wird, in welche Richtung er fahren soll. Ferner kann gegebenenfalls auch eine Lichtverteilung in der Form eines Baustellenlichts generiert werden, mit dem die Lichtverteilung bei Durchfahrt einer Engstelle verengt wird. Ein weiterer Anwendungsfall ist die Erzeugung eines Notmanövrierlichts, bei dem in einer Gefahrensituation dem Fahrer über eine entsprechende Ausleuchtung eines bestimmten Bereichs angezeigt wird, in welche Richtung er lenken soll. Mit dem Multiapertur-Projektionsdisplay kann durch entsprechende Ansteuerung des LCD-Displays auch eine Lichtinszenierung beim Fahrzeugstart erzeugt werden, indem zu diesem Zeitpunkt der Scheinwerfer temporär angeschaltet wird und durch entsprechende Veränderung der Strukturen der Segmente eine dynamische Bewegung in der Lichtverteilung generiert wird.

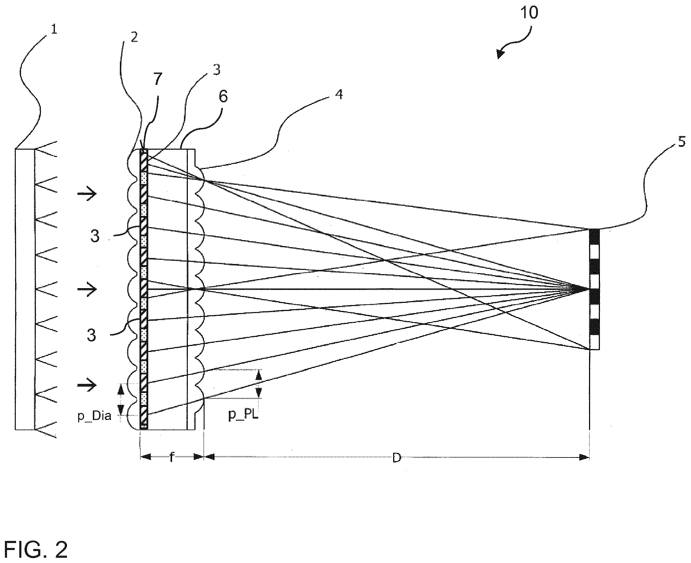

Fig. 2 zeigt in Schnittansicht das Multiapertur-Projektionsdisplay 10, das in dem Scheinwerfer der Fig. 1 zum Einsatz kommt und einem Display aus der Druckschrift DE 10 2009 024 894 A1 entspricht (siehe dort Fig. 10). Das Projektionsdisplay 10 umfasst ein Leuchtmittel 1, welches z.B. als Laserdiode oder LED oder OLED ausgeführt sein kann. Das Licht des Leuchtmittels fällt auf ein Feldlinsen-Array in der Form einer Vielzahl von Kondensorlinsen 2, die auf einem Substrat 6 (z. B. Glassubstrat) aufgebracht sind, wobei sich benachbart zu dem Feldlinsen-Array ein LCD-Display 7 befindet, durch das die variablen Segmente 3 mit darin enthaltenen Objektstrukturen aus transmittiven und lichtundurchlässigen Bereichen generiert werden. Die Segmente sind durch schraffierte Abschnitte in dem LCD-Display 7 angedeutet und aus Übersichtlichkeitsgründen nur teilweise mit dem Bezugszeichen 3 bezeichnet. Auf der rechten Seite des Glassubstrats befindet sich ein Array aus Projektionslinsen 4, wobei der Abstand zwischen den Projektionslinsen und den Segmenten 3 im Wesentlichen der Brennweite f der einzelnen Projektionslinsen entspricht. Jede Projektionslinse ist einem Segment bzw. einer Objektstruktur zugeordnet, die über die entsprechende Projektionslinse in die Projektionsebene 5 im Abstand D von dem Array der Projektionslinsen abgebildet wird. Dies wird durch die dargestellten Strahlengänge verdeutlicht. Man erkennt dabei, dass der Pitch-Abstand p_Dia zwischen benachbarten Segmenten 3 größer ist als der Pitch-Abstand p_PL zwischen benachbarten Projektionslinsen 4. Hierdurch wird eine Verkippung der optischen Achsen der entsprechenden Paare von Objektstruktur und Projektionslinse bewirkt und damit eine Überlagerung aller projizierten Bilder der Objektstrukturen 3 zu einem Gesamtbild in der Projektionsebene 5 erreicht.

Die Vergrößerung M des Gesamtbilds in der Projektionsebene 5 folgt aus dem Verhältnis der Projektionsentfernung D zur Brennweite f der Projektionslinsen 4 und lautet wie folgt:

$$M = \frac{D}{f} = \frac{p\_PL}{p\_Dia - p\_PL} \qquad (1)$$

Die Vergrößerung ist somit von dem Unterschied der Pitch-Abstände zwischen den Objektstrukturen und den Projektionslinsen abhängig. Je kleiner dieser Unterschied ist, desto größer ist die Vergrößerung und desto weiter liegt die Projektionsebene von dem Projektionsdisplay entfernt.

Die im Vorangegangenen beschriebenen Ausführungsformen der Erfindung weisen eine Reihe von Vorteilen auf. Insbesondere kann ohne bewegliche Teile in einem Fahrzeugscheinwerfer ein dynamischer Anteil im Scheinwerferlicht generiert werden. Dabei können verschiedene Lichteffekte, wie z.B. ein Kurvenlicht, ein blendfreies Fernlicht und dergleichen, erzeugt werden. Unter Verwendung eines Multiapertur-Projektionsdisplays mit einem hochauflösenden LCD-Display lässt sich der dynamische Lichtanteil schnell und hochpräzise erzeugen. Mit an sich bekannten Varianten des Multiapertur-Projektionsdisplays lassen sich ferner dynamische Lichtverteilungen mit ausgedehnter Tiefenschärfe generieren.

## Bezugszeichenliste

| | |
|---|---|
| 100 | Scheinwerfer |
| 10 | Multiapertur-Projektionsdisplay |
| 11 | innere Beleuchtungseinrichtung |
| 11a, 11b | Beleuchtungseinheiten der inneren Beleuchtungseinrichtung |
| 12 | äußere Beleuchtungseinrichtung |
| 1 | Leuchtmittel |
| 2 | Kondensorlinsen |
| 3 | Segmente |
| 4 | Projektionslinsen |
| 5 | Projektionsebene |
| 6 | Glassubstrat |
| 7 | LCD-Display |

## Patentansprüche

1. Scheinwerfer für ein Kraftfahrzeug, insbesondere Frontscheinwerfer, umfassend eine erste Beleuchtungseinrichtung (11) und eine zweite Beleuchtungseinrichtung (12) zur gemeinsamen Erzeugung einer Lichtverteilung vor dem Scheinwerfer (100), wobei die erste Beleuchtungseinrichtung (11) zur Erzeugung eines statischen Anteils der Lichtverteilung vorgesehen ist und die zweite Beleuchtungseinrichtung (12) zur Erzeugung eines dynamischen Anteils der Lichtverteilung vorgesehen, **dadurch gekennzeichnet, dass**

   - die zweite Beleuchtungseinrichtung (12) ein Multiapertur-Projektionsdisplay (10) mit einem Leuchtmittel (1) und einem flächigen digitalen Bildgeber (7) sowie einem Array aus Projektionslinsen (4) umfasst, wobei der digitale Bildgeber (7) Segmente (3) mit einer Vielzahl von Pixeln in jedem Segment und mit einer veränderbaren Aufteilung des jeweiligen Segments (3) in transmittive und lichtundurchlässige Bereiche umfasst und wobei jede Projektionslinse (4) einem Segment (3) des digitalen Bildgebers (7) zugeordnet ist, so dass bei Beleuchtung des Arrays mit dem Leuchtmittel (1) zumindest ein Teil der Segmente (3) durch die zugeordneten Projektionslinsen (4) vor den Scheinwerfer (100) projiziert wird, wobei der Pitch-Abstand (p_Dia) zwischen benachbarten Segmenten (3) größer ist als der Pitch-Abstand (p_PL) zwischen benachbarten Projektionslinsen (4),
   - der Scheinwerfer (100) derart ausgestaltet ist, dass der digitale Bildgeber (7) bei Betrieb des Scheinwerfers (100) im Kraftfahrzeug durch Veränderung der Aufteilung in transmittive und lichtundurchlässigen Bereiche für zumindest einen Teil der Segmente (3) den dynamischen Anteil der Lichtverteilung erzeugt.

2. Scheinwerfer nach Anspruch 1, **dadurch gekennzeichnet, dass** mit dem Scheinwerfer (100) eine Abblendlichtverteilung und/oder eine Fernlichtverteilung und/oder ein blendfreies Fernlicht erzeugbar ist.

3. Scheinwerfer nach einem der vorhergehenden Ansprüche, **dadurch gekennzeichnet, dass** der Scheinwerfer (100) derart ausgestaltet ist, dass der über die zweite Beleuchtungseinrichtung (12) erzeugte dynamische Anteil der Lichtverteilung bei Betrieb des Scheinwerfers im Kraftfahrzeug in Abhängigkeit von einem oder mehreren Fahrparametern des Kraftfahrzeugs und/oder einem oder mehreren Parametern in der Umgebung des Kraftfahrzeugs erzeugt wird.

4. Scheinwerfer nach einem der vorhergehenden Ansprüche, **dadurch gekennzeichnet, dass** der Scheinwerfer (100) derart ausgestaltet ist, dass mit der zweiten Beleuchtungseinrichtung (12) in einem Betriebsmodus des Scheinwerfers (100) eine dynamische Hell-Dunkel-Grenze einer Abblendlichtverteilung erzeugt wird und/oder dass mit der zweiten Beleuchtungseinrichtung (12) in einem Betriebsmodus des Scheinwerfers (100) die Breite der Lichtverteilung verändert wird und/oder dass mit der zweiten Beleuchtungseinrichtung (12) in einem Betriebsmodus des Scheinwerfers (100) Objekte in der Umgebung des Kraftfahrzeugs stärker oder weniger stark beleuchtet werden.

5. Scheinwerfer nach einem der vorhergehenden Ansprüche, **dadurch gekennzeichnet, dass** die erste Beleuchtungseinrichtung (11) eine Beleuchtungseinrichtung ohne Linsen oder eine Beleuchtungseinrichtung mit einer oder mehreren Linsen ist, wobei eine jeweilige Linse in Draufsicht eine minimale Ausdehnung von 1 cm oder mehr und insbesondere von 3 cm oder mehr aufweist.

6. Scheinwerfer nach Anspruch 5, **dadurch gekennzeichnet, dass** die erste Beleuchtungseinrichtung (11) maximal 25 Linsen umfasst.

7. Scheinwerfer nach Anspruch 5 oder 6, **dadurch gekennzeichnet, dass** die erste Beleuchtungseinrichtung (11) eine Beleuchtungseinheit (11a) mit Projektionsoptik und/oder eine Beleuchtungseinheit (11b) mit Reflexionsoptik umfasst.

8. Scheinwerfer nach einem der vorhergehenden Ansprüche, **dadurch gekennzeichnet, dass** der digitale Bildgeber (7) der zweiten Beleuchtungseinrichtung (12) ein LCD-Display umfasst.

9. Scheinwerfer nach einem der vorhergehenden Ansprüche, **dadurch gekennzeichnet, dass** die transmittiven Bereiche in den jeweiligen Segmenten (3) des digitalen Bildgebers (7) einen festen Transmissionsgrad von 100% oder einen variierbaren positiven Transmissionsgrad von maximal 100% aufweisen.

10. Kraftfahrzeug, **dadurch gekennzeichnet, dass** das Kraftfahrzeug einen oder mehrere Scheinwerfer nach einem der vorhergehenden Ansprüche umfasst.

**Claims**

1. Headlamp for a motor vehicle, in particular front headlamp, comprising a first lighting device (11) and a second lighting device (12) for producing a light distribution in front of the headlamp (100) together, wherein the first lighting device (11) is provided for producing a static component of the light distribution and the second lighting device (12) is provided for producing a dynamic component of the light distribution, **characterized in that**

   - the second lighting device (12) comprises a multi-aperture projection display (10) having an illuminant (1) and an areal digital image generator (7), and an array of projection lenses (4), wherein the digital image generator (7) comprises segments (3) with a multiplicity of pixels in each segment and with a changeable division of the respective segment (3) in transmissive and light-opaque regions and wherein each projection lens (4) is assigned to a segment (3) of the digital image generator (7) such that, when the array is illuminated by the illuminant (1), at least some of the segments (3) are projected in front of the headlamp (100) by the assigned projection lenses (4), wherein the pitch distance (p_Dia) between adjacent segments (3) is greater than the pitch distance (p_PL) between adjacent projection lenses (4),
   - the headlamp (100) is configured in such a way that the digital image generator (7) produces the dynamic component of the light distribution during operation of the headlamp (100) in the motor vehicle by changing the division in transmissive and light-opaque regions for at least some of the segments (3).

2. Headlamp according to Claim 1, **characterized in that** a low beam distribution and/or a high beam distribution and/or an antiglare high beam is producible using the headlamp (100).

3. Headlamp according to either of the preceding claims, **characterized in that** the headlamp (100) is configured in such a way that the dynamic component of the light distribution produced by the second lighting device (12) is produced during operation of the headlamp in the motor vehicle depending on one or more driving parameters of the motor vehicle and/or one or more parameters in the surroundings of the motor vehicle.

**4.** Headlamp according to any one of the preceding claims, **characterized in that** the headlamp (100) is configured in such a way that a dynamic light/dark boundary of a low beam distribution is produced using the second lighting device (12) in one mode of operation of the headlamp (100) and/or **in that** the width of the light distribution is modified using the second lighting device (12) in one mode of operation of the headlamp (100) and/or in that objects in the surroundings of the motor vehicle are illuminated more strongly or less strongly using the second lighting device (12) in one mode of operation of the headlamp (100).

**5.** Headlamp according to any one of the preceding claims, **characterized in that** the first lighting device (11) is a lighting device without lenses or a lighting device with one or more lenses, wherein, in a plan view, a respective lens has a minimal extent of 1 cm or more and, in particular, of 3 cm or more.

**6.** Headlamp according to Claim 5, **characterized in that** the first lighting device (11) comprises a maximum of 25 lenses.

**7.** Headlamp according to Claim 5 or 6, **characterized in that** the first lighting device (11) comprises a lighting unit (11a) with projection optics and/or a lighting unit (11b) with reflection optics.

**8.** Headlamp according to any one of the preceding claims, **characterized in that** the digital image generator (7) of the second lighting device (12) comprises an LCD display.

**9.** Headlamp according to any one of the preceding claims, **characterized in that** the transmissive regions in the respective segments (3) of the digital image generator (7) have a fixed transmittance of 100% or a variable positive transmittance of at most 100%.

**10.** Motor vehicle, **characterized in that** the motor vehicle comprises one or more headlamps according to any one of the preceding claims.

**Revendications**

**1.** Phare destiné à un véhicule automobile, notamment phare avant, comprenant un premier dispositif d'éclairage (11) et un deuxième dispositif d'éclairage (12) destinés à générer conjointement une distribution de lumière devant le phare (100), le premier dispositif d'éclairage (11) étant prévu pour générer une partie statique de la distribution de lumière et le deuxième dispositif d'éclairage (12) étant prévu pour générer une partie dynamique de la distribution de lumière, **caractérisé en ce que**

- le deuxième dispositif d'éclairage (12) comprend un écran de projection à ouvertures multiples (10) pourvu d'une lampe (1) et d'un imageur numérique (7) sensiblement bidimensionnel et un réseau de lentilles de projection (4), l'imageur numérique (7) comprenant des segments (3) pourvus d'un grand nombre de pixels dans chaque segment et d'une division modifiable du segment respectif (3) en zones transmissives et en zones opaques et chaque lentille de projection (4) étant associée à un segment (3) de l'imageur numérique (7) de sorte que lorsque le réseau est éclairé par la lampe (1), au moins une partie des segments (3) est projetée devant le phare (100) par les lentilles de projection (4) associées, la distance de pas (p_Dia) entre des segments adjacents (3) étant supérieure à la distance de pas (p_PL) entre des lentilles de projection adjacentes (4),
- le phare (100) est conçu de manière à ce que, lors du fonctionnement du phare (100) dans le véhicule automobile, l'imageur numérique (7) génère la partie dynamique de la distribution de lumière pour au moins une partie des segments (3) en modifiant la division en zones transmissives et en zones opaques.

**2.** Phare selon la revendication 1, **caractérisé en ce qu'**une distribution de lumière de croisement et/ou une distribution de lumière à longue portée et/ou une distribution de lumière à longue portée non éblouissante peuvent être générées avec le phare (100).

**3.** Phare selon l'une des revendications précédentes, **caractérisé en ce que** le phare (100) est conçu de manière à ce que la partie dynamique de la distribution de lumière générée par le deuxième dispositif d'éclairage (12) soit générée lors du fonctionnement du phare dans le véhicule automobile en fonction d'un ou plusieurs paramètres de conduite du véhicule automobile et/ou d'un ou plusieurs paramètres de l'environnement du véhicule automobile.

**4.** Phare selon l'une des revendications précédentes, **caractérisé en ce que** le phare (100) est conçu de manière à ce qu'une limite dynamique clair-obscur d'une distribution de lumière de croisement soit générée avec le deuxième dispositif d'éclairage (12) dans un mode de fonctionnement du phare (100) et/ou que la largeur de la distribution de lumière soit modifiée avec le deuxième dispositif d'éclairage (12) dans un mode de fonctionnement du phare (100) et/ou **en ce que** des objets situés dans l'environnement du véhicule automobile soient plus ou moins fortement éclairés avec le deuxième dispositif d'éclairage (12) dans un mode de fonctionnement du phare (100).

5. Phare selon l'une des revendications précédentes, **caractérisé en ce que** le premier dispositif d'éclairage (11) est un dispositif d'éclairage sans lentille ou un dispositif d'éclairage à une ou plusieurs lentilles, une lentille respective ayant une dimension minimale de 1 cm ou plus et en particulier de 3 cm ou plus en vue de dessus.

6. Phare selon la revendication 5, **caractérisé en ce que** le premier dispositif d'éclairage (11) comprend au maximum 25 lentilles.

7. Phare selon la revendication 5 ou 6, **caractérisé en ce que** le premier dispositif d'éclairage (11) comprend une unité d'éclairage (11a) à optique de projection et/ou une unité d'éclairage (11b) à optique de réflexion.

8. Phare selon l'une des revendications précédentes, **caractérisé en ce que** l'imageur numérique (7) du deuxième dispositif d'éclairage (12) comprend un afficheur LCD.

9. Phare selon l'une des revendications précédentes, **caractérisé en ce que** les zones transmissives dans les segments respectifs (3) de l'imageur numérique (7) ont un facteur de transmission fixe de 100 % ou un facteur de transmission positif variable d'un maximum de 100 %.

10. Véhicule automobile, **caractérisé en ce que** le véhicule automobile comprend un ou plusieurs phares selon l'une des revendications précédentes.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016010811 A1
- DE 102012103313 A1
- WO 2015058227 A1
- DE 102009024894 A1
- DE 102011076083 A1